# EUROPEAN PATENT APPLICATION

(11) **EP 4 545 771 A1**
(43) Date of publication of application: **30.04.2025**
(21) Application number: 24200421.6
(22) Date of filing: 13.09.2024
(51) Int. Cl.: F02C 3/30, F02C 9/34, F23R 3/34

(54) **TURBINE ENGINE INCLUDING A FUEL AND STEAM SYSTEM**

(30) Priority: 23.10.2023 US 202318492002
(71) Applicant: General Electric Company, Evendale, Ohio 45215 (US)
(72) Inventor: NAIK, Pradeep, 560066 Bengaluru (IN); COOPER, Clayton, Evendale, 45241 (US); VISE, Steven, West Chester, 45069 (US); BENJAMIN, Michael, Evendale, 45241 (US); MARAKOVITS, Steven, Evendale, 45215 (US); PAL, Sibtosh, Evendale, 45241 (US); MOHAN, Sripathi, 560066 Bengaluru (IN)
(74) Representative: Openshaw & Co.

(57) **Abstract**

A turbine engine (10) has a combustor (28, 500, 600, 700, 800, 900, 1000) in a core air flow path that generates combustion gases (74) and a fuel and steam system (100, 200, 300, 400) fluidly coupled to the combustor (28, 500, 600, 700, 800, 900, 1000). The fuel and steam system (100, 200, 300, 400) has a steam system (104, 204, 304, 404) for providing a steam flow to the combustor (28, 500, 600, 700, 800, 900, 1000) and a fuel system (102, 202, 302, 402) for providing a primary fuel flow and a secondary fuel flow to the combustor (28, 500, 600, 700, 800, 900, 1000). The fuel system (102, 202, 302, 402) has a first state in which there is a first flow rate of the secondary fuel flow to the combustor (28, 500, 600, 700, 800, 900, 1000) and a second state in which there is a second flow rate of the secondary fuel flow to the combustor (28, 500, 600, 700, 800, 900, 1000). The first flow rate and the second flow rate are different. The first state and the second state are based on a condition of the steam system (104, 204, 304, 404).

## Description

### TECHNICAL FIELD

The present disclosure relates generally to a fuel and steam system, for example, for turbine engines.

### BACKGROUND

Turbine engines generally include a fan and a core section arranged in flow communication with one another. A combustor is arranged in the core section to generate combustion gases for driving a turbine in the core section of the turbine engine.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 illustrates a schematic cross-sectional view of a turbine engine, taken along a longitudinal centerline axis of the engine, according to the present disclosure.
FIG. 2 illustrates a schematic cross-sectional view of a turbine engine, taken along a longitudinal centerline axis of the engine, according to the present disclosure.
FIG. 3 illustrates a schematic view of a fuel and steam system for a turbine engine, according to the present disclosure.
FIG. 4 illustrates a schematic view of a fuel and steam system for a turbine engine, according to the present disclosure.
FIG. 5 illustrates a schematic cross-sectional view of a combustor for a turbine engine, taken along a longitudinal centerline axis of the combustor, according to the present disclosure.
FIG. 6 illustrates a schematic cross-sectional view of a combustor for a turbine engine, taken along a longitudinal centerline axis of the combustor, according to the present disclosure.
FIG. 7 illustrates a schematic cross-sectional view of a combustor for a turbine engine, taken along a radial plane extending through a dilution opening of the combustor, according to the present disclosure.
FIG. 8 illustrates a schematic cross-sectional view of a combustor for a turbine engine, taken along a longitudinal centerline axis of the combustor, according to the present disclosure.
FIG. 9 illustrates a schematic cross-sectional view of a combustor for a turbine engine, taken along a longitudinal centerline axis of the combustor, according to the present disclosure.
FIG. 10 illustrates a schematic cross-sectional view of a combustor for a turbine engine, taken along a longitudinal centerline axis of the combustor, according to the present disclosure.
FIG. 11 illustrates a method of operating a turbine engine having a fuel and steam system, according to the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and the scope of the present disclosure.

As used herein, the terms "first" and "second" and the like may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or a vehicle, and refer to the normal operational attitude of the turbine engine or the vehicle. For example, with regard to a turbine engine, forward refers to a position closer to an engine inlet and aft refers to a position closer to an engine nozzle or an exhaust.

As used herein, the terms "low," "mid" (or "mid-level"), and "high," or their respective comparative degrees (e.g., "lower" and "higher", where applicable), when used with compressor, turbine, shaft, fan, or turbine engine components, each refers to relative pressures, relative speeds, relative temperatures, and/or relative power outputs within an engine unless otherwise specified. For example, a "low power" setting defines the engine configured to operate at a power output lower than a "high power" setting of the engine, and a "mid-level power" setting defines the engine configured to operate at a power output higher than a "low power" setting and lower than a "high power" setting. The terms "low," "mid" (or "mid-level"), or "high" in such aforementioned terms may additionally, or alternatively, be understood as relative to minimum allowable speeds, pressures, or temperatures, or minimum or maximum allowable speeds, pressures, or temperatures relative to normal, desired, steady state, etc., operation of the engine.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein. The terms include integral and unitary configurations (e.g., blisk rotor blade systems).

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially" is not to be limited to the precise value specified. In at least some instances, the approximating language may correspond to the precision of an instrument for measuring the value, or the precision of the methods or the machines for constructing the components or the systems or manufacturing the components or the systems. For example, the approximating language may refer to being within a one, a two, a four, a ten, a fifteen, or a twenty percent margin in either individual values, range(s) of values or endpoints defining range(s) of values.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

The present disclosure provides a fuel and steam system for injecting fuel and steam into a combustor of a turbine engine. In engines having steam injected into the core of the combustor (e.g., steam recovered from the engine exhaust or steam provided from a steam source or a water source), specific fuel consumption (SPC) is increased, as compared to engines without the steam injection. To achieve the SPC benefit, a significant amount of steam (e.g., about twenty percent to sixty percent steam to air ratio) may be injected into the core of the combustor.

In such engines having steam injection, a partial loss of steam or a total loss of steam may thus result in a loss of engine power. To counteract such a loss in power, the present disclosure provides a secondary fuel injection introduced into the combustor downstream of a primary fuel injection at the forward end of the combustor. The fuel is controlled to be selectively injected into the combustor based on a condition of a steam system that provides the steam flow, based on an engine operating condition or a power condition, or both.

Accordingly, the fuel and steam system of the present disclosure may introduce fuel and steam into the combustor in a combined fuel-steam flow or may introduce a separate fuel flow and steam flow. In some examples, both the fuel flow and the steam flow are injected in the secondary zone of the combustor. In some examples, the fuel flow is injected into the primary zone of the combustor and the steam is injected into the secondary zone of the combustor. In some examples, air may be introduced along with the fuel flow and the steam flow through air openings or through additional swirlers provided in the combustor liner.

As mentioned, the present disclosure provides for controlled injection of the fuel flow into the combustor based on a steam condition of the engine. In situations of partial loss or full loss of steam flow into the combustor, the fuel may be injected into the primary zone or the secondary zone of the combustor to recover the drop in power caused by the loss of steam. The fuel and steam system of the present disclosure includes a controller that determines a loss in engine power, a loss in steam pressure, or both, and then controls the fuel system such that fuel may be injected to augment the power to achieve desired power levels and thrust levels.

As will be described in more detail to follow, the steam and fuel system of the present disclosure may include injectors or nozzles with independent steam and fuel circuits to inject steam in cases when the steam system is normally operating (e.g., operating within predefined parameters) and to inject fuel when there is a loss in steam flow. In some examples, the steam flow and the fuel flow may be mixed in a mixing device and then injected into the combustor as an independent mixture of the fuel and steam. The fuel and steam system of the present disclosure may include both steam and fuel injected at all operating conditions to obtain an additional NOₓ benefit. In such an example, the steam and the fuel may be injected through independent circuits or may be mixed and injected together as a combined flow into the combustor.

In some examples, the steam and fuel system of the present disclosure may inject steam and fuel at different axial locations such that high temperatures created after the secondary fuel injection may be reduced by the steam flow. In some examples, the steam and fuel system of the present disclosure may include steam and fuel injected at different circumferential locations such that the steam may be injected in high temperature regions and the fuel may be directed to be injected in low temperature regions.

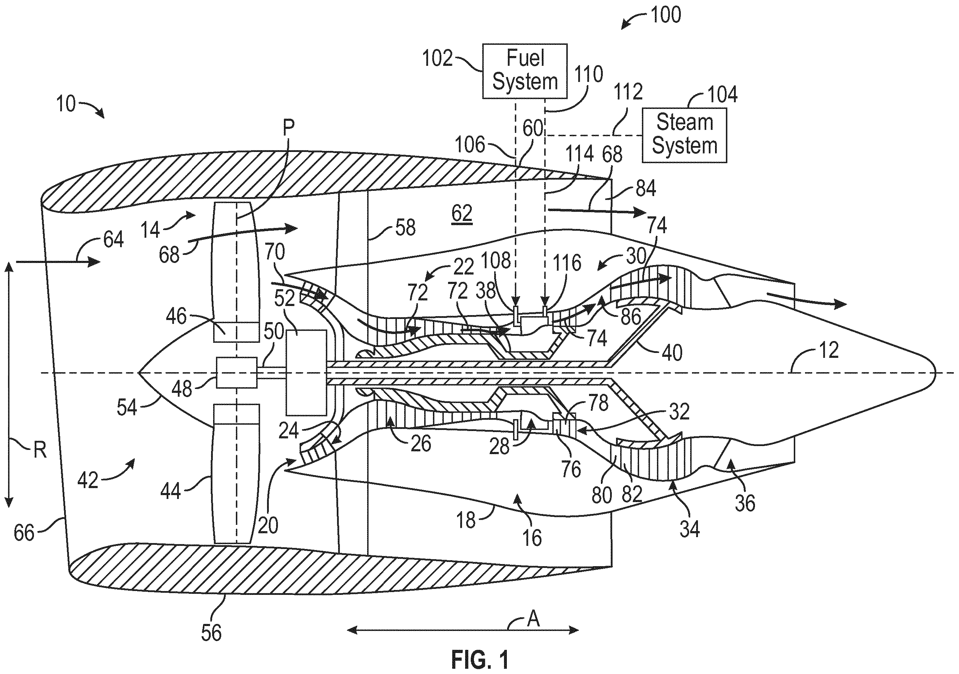

Referring now to the drawings, FIG. 1 is a schematic cross-sectional view of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 depicted generally includes an outer casing 18 that is substantially tubular and defines an annular inlet 20. As schematically shown in FIG. 1, the outer casing 18 encases, in serial flow relationship, a compressor section 22 including a booster or a low pressure (LP) compressor 24 followed downstream by a high pressure (HP) compressor 26, a combustion section 28, a turbine section 30 including a high pressure (HP) turbine 32 followed downstream by a low pressure (LP) turbine 34, and a jet exhaust nozzle section 36. Accordingly, the turbo-engine 16 includes the compressor section 22, the combustion section 28, and the turbine section 30, and the components thereof. A high pressure (HP) shaft 38 or a spool drivingly connects the HP turbine 32 to the HP compressor 26 to rotate the HP turbine 32 and the HP compressor 26 in unison. A low pressure (LP) shaft 40 drivingly connects the LP turbine 34 to the LP compressor 24 to rotate the LP turbine 34 and the LP compressor 24 in unison. The compressor section 22, the combustion section 28, the turbine section 30, and the jet exhaust nozzle section 36 together define a core air flow path.

For the embodiment depicted in FIG. 1, the fan section 14 includes a fan 42 (e.g., a variable pitch fan) having a plurality of fan blades 44 coupled to a disk 46 in a spaced apart manner. As depicted in FIG. 1, the fan blades 44 extend outwardly from the disk 46 generally along the radial direction R Each fan blade 44 is rotatable relative to the disk 46 about a pitch axis P by virtue of the fan blades 44 being operatively coupled to an actuation member 48 configured to collectively vary the pitch of the fan blades 44 in unison. The fan blades 44, the disk 46, and the actuation member 48 are together rotatable about the longitudinal centerline axis 12 via a fan shaft 50 that is powered by the LP shaft 40 across a power gearbox, also referred to as a gearbox assembly 52. The gearbox assembly 52 is shown schematically in FIG. 1. The gearbox assembly 52 includes a plurality of gears for adjusting the rotational speed of the fan shaft 50 and, thus, the fan 42 relative to the LP shaft 40.

Referring still to the exemplary embodiment of FIG. 1, the disk 46 is covered by a rotatable fan hub 54 aerodynamically contoured to promote an airflow through the plurality of fan blades 44. In addition, the fan section 14 includes an annular fan casing or a nacelle 56 that circumferentially surrounds the fan 42 and at least a portion of the turbo-engine 16. The nacelle 56 is supported relative to the turbo-engine 16 by a plurality of circumferentially spaced outlet guide vanes 58. Moreover, a downstream section 60 of the nacelle 56 extends over an outer portion of the turbo-engine 16 to define a bypass airflow passage 62 therebetween.

During operation of the turbine engine 10, a volume of air 64 enters the turbine engine 10 through an inlet 66 of the nacelle 56 or the fan section 14. As the volume of air 64 passes across the fan blades 44, a first portion of air 68 is directed or routed into the bypass airflow passage 62, and a second portion of air 70 is directed or is routed into the upstream section of the core air flow path, or, more specifically, into the annular inlet 20 of the LP compressor 24. The ratio between the first portion of air 68 and the second portion of air 70 is commonly known as a bypass ratio. The pressure of the second portion of air 70 is then increased, generating compressed air 72, and the compressed air 72 is routed through the HP compressor 26 and into the combustion section 28. The combustor of the combustion section 28 is positioned in the core air flow path where the compressed air 72 is mixed with a fuel flow and burned or combusted to generate combustion gases 74. As described in more detail to follow, the fuel flow may be a primary fuel flow provided to the combustor.

The combustion gases 74 are routed into the HP turbine 32 and expanded through the HP turbine 32 where a portion of thermal energy and kinetic energy from the combustion gases 74 is extracted via sequential stages of HP turbine stator vanes 76 that are coupled to the outer casing 18 and HP turbine rotor blades 78 that are coupled to the HP shaft 38, thus, causing the HP shaft 38 to rotate, thereby supporting operation of the HP compressor 26. The combustion gases 74 are then routed into the LP turbine 34 and expanded through the LP turbine 34. Here, a second portion of thermal energy and the kinetic energy is extracted from the combustion gases 74 via sequential stages of LP turbine stator vanes 80 that are coupled to the outer casing 18 and LP turbine rotor blades 82 that are coupled to the LP shaft 40, thus, causing the LP shaft 40 to rotate, thereby supporting operation of the LP compressor 24 and rotation of the fan 42 via the gearbox assembly 52.

The combustion gases 74 are subsequently routed through the jet exhaust nozzle section 36 of the turbo-engine 16 to provide propulsive thrust. Simultaneously, the pressure of the first portion of air 68 is substantially increased as the first portion of air 68 is routed through the bypass airflow passage 62 before being exhausted from a fan nozzle exhaust section 84 of the turbine engine 10, also providing propulsive thrust. The HP turbine 32, the LP turbine 34, and the jet exhaust nozzle section 36 at least partially define a hot gas path 86 for routing the combustion gases 74 through the turbo-engine 16.

The turbine engine 10 includes a fuel and steam system 100. The fuel and steam system 100 is fluidly coupled to the combustor of the combustion section 28. The fuel and steam system 100 includes a fuel system 102 and a steam system 104. The fuel system 102 provides a fuel flow to the combustion section 28 to produce the combustion gases 74. The fuel system 102 includes a fuel tank or a fuel supply for storing fuel therein, a fuel supply line 106, and a fuel injector 108. The fuel flow is provided from the fuel tank, along the fuel supply line 106 to the fuel injector 108, which introduces the fuel flow into the combustion section 28. The fuel system 102 may include one or more flow control devices or valves along the fuel supply line 106 for controlling an amount of the fuel provided to the combustion section 28.

The fuel injector 108 is provided at a forward end of a combustor (not shown) of the combustion section 28, as will be described in more detail to follow. Accordingly, fuel provided along the fuel supply line 106 is provided at a forward end of the combustor of the combustion section 28. The fuel system 102 includes a fuel supply line 110 to provide a fuel flow to the combustion section 28 downstream of the fuel flow provided by the fuel supply line 106. Accordingly, the fuel supply line 106 may be referred to as a primary fuel supply line 106 and the fuel supply line 110 may be referred to as a secondary fuel supply line 110. The fuel flow from the fuel supply line 110 may be provided to the combustion section 28 in conjunction with a steam flow provided along a steam supply line 112 from the steam system 104. The combined fuel and steam flow, referred to herein as a fuel-steam flow, may be provided along a fuel-steam supply line 114 to a fuel-steam injector 116, which introduces the fuel-steam flow into the combustion section 28 downstream of the fuel injector 108.

In some examples, the fuel and the steam are injected simultaneously such that the flow along the fuel-steam supply line 114 is a combined mixture of a fuel (from fuel supply line 110) and steam (from steam supply line 112) that is introduced to the combustor.

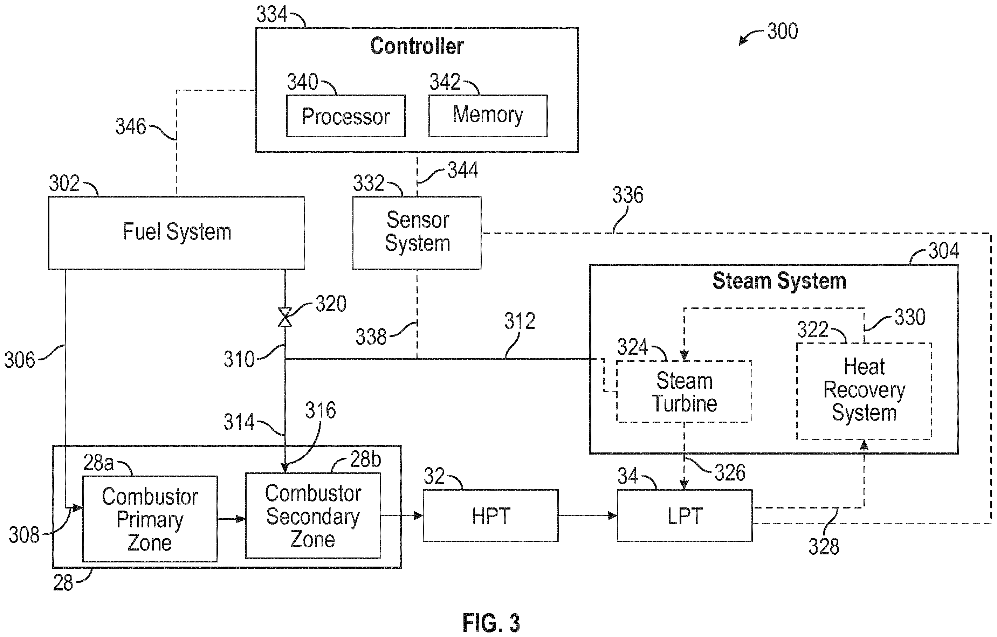

In other examples, during normal operating conditions of the engine (e.g., when the steam pressure is within a predetermined value or range), no fuel is provided along the fuel supply line 110, and only steam is provided along the steam supply line 112 and along the fuel-steam supply line 114 into the fuel-steam injector 116. In such a condition, when the engine experiences a partial loss or a full loss in the steam flow, the fuel flow along the fuel supply line 110 is caused to be introduced into the combustor, as is described in more detail with respect to FIG. 3. When fuel is injected into the combustor in this example, the flow through the fuel-steam supply line 114 may be solely fuel (during situations of total steam flow loss) or may be a combined mixture of fuel and steam (during situations of partial steam flow loss).

In both of the aforementioned examples, however, fuel is supplied to the combustor through the primary fuel supply line 106 in all operating conditions to provide for the primary combustion within the combustor.

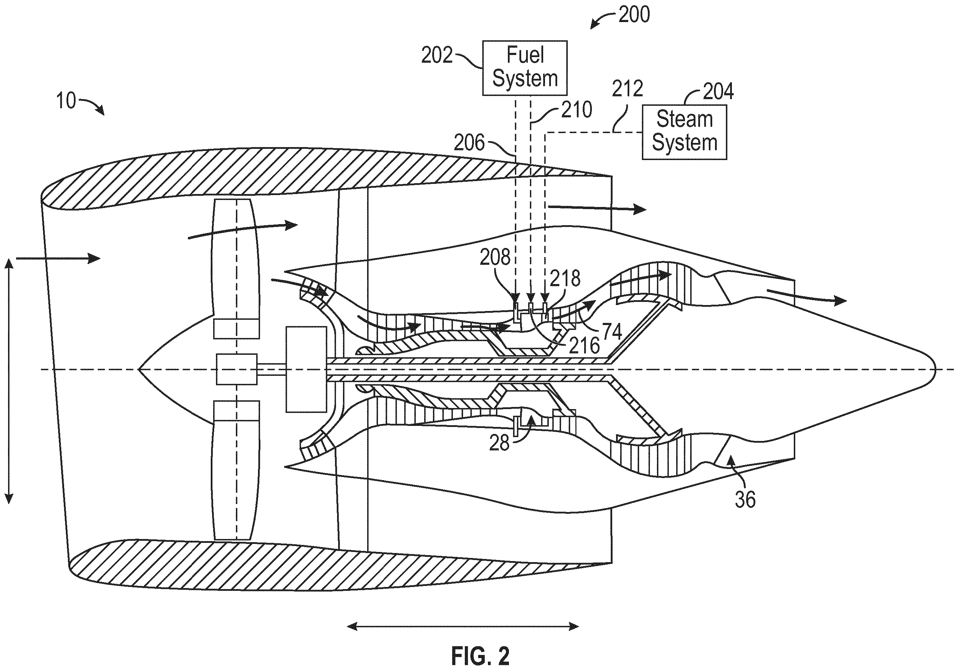

FIG. 2 illustrates a schematic cross-sectional view of the turbine engine 10 of FIG. 1 with another exemplary fuel and steam system 200. The fuel and steam system 200 is similar to the fuel and steam system 100, except that the fuel flow and the steam flow are introduced separately into the combustion section 28, as described below.

The fuel and steam system 200 includes a fuel system 202 that includes a fuel tank or a fuel supply for storing fuel therein, a fuel supply line 206, and a fuel injector 208. The fuel system 202 provides a fuel flow along the fuel supply line 206, through the fuel injector 208, and into the combustion section 28 to produce the combustion gases 74, as discussed with respect to FIG. 1. The fuel system 202 may include one or more valves or flow control devices along the fuel supply line 206 for controlling an amount of the fuel provided to the combustion section 28. The fuel injector 208 is provided at a forward end of a combustor (not shown) of the combustion section 28. Accordingly, fuel provided along the fuel supply line 206 is provided at a forward end of the combustor of the combustion section 28.

The fuel system 202 includes a fuel supply line 210 to provide a fuel flow to the combustion section 28 downstream of the fuel flow provided by the fuel supply line 206. Accordingly, the fuel supply line 206 may be referred to as a primary fuel supply line 206 and the fuel supply line 210 may be referred to as a secondary fuel supply line 210. The fuel flow from the fuel supply line 210 may be provided to the combustion section 28 through a fuel injector 216. Accordingly, the fuel injector 208 may be referred to as a primary fuel injector 208 and the fuel injector 216 may be referred to as a secondary fuel injector 216.

The fuel and steam system 200 includes a steam system 204 that provides steam along a steam supply line 212 to a steam injector 218 and into the combustion section 28. The steam system 204 introduces steam into the combustion section 28 downstream of the fuel injector 208.

The fuel provided by the fuel system 102 (FIG. 1) and the fuel system 202 (FIG. 2) may be any type of fuel used for turbine engines including liquid fuel or gaseous fuel. For example, the fuel may be JetA, sustainable aviation fuels (SAF) including biofuels, hydrogen-based fuel (H₂), or the like, or combinations thereof.

The steam provided by the steam system 104 (FIG. 1) and the steam system 204 (FIG. 2) may be from a discrete steam source (e.g., a separate steam source and/or a water source converted to steam). Alternatively, or additionally, the steam may be provided by the steam system 104 and the steam system 204 that generates steam from the exhaust of the turbine engine 10. That is, for example, the steam system 104 and the steam system 204 may include a heat recovery system in fluid communication with any component of the turbo-engine 16, the jet exhaust nozzle section 36, or any combination thereof. In such an example, the steam system 104 and the steam system 204 extract steam from the turbine engine 10 and inject the steam along the steam supply line 112 and the steam supply line 212, respectively, to the combustion section 28.

In some examples, the fuel and the steam are injected simultaneously such that the flow along the fuel supply line 210 and the steam along the steam supply line 212 are introduced at the same time to the combustor.

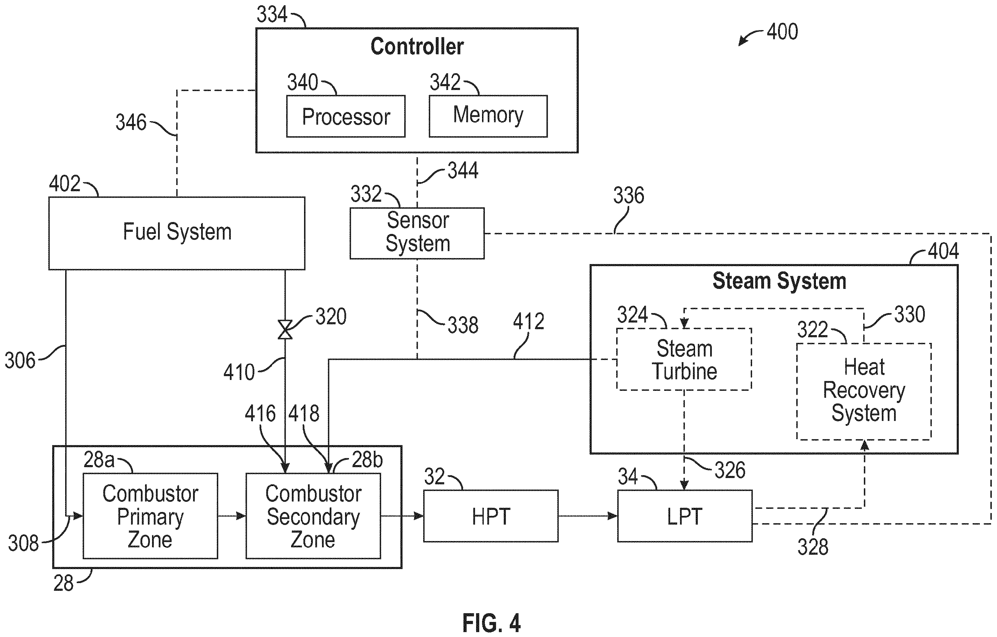

In other examples, during normal operating conditions of the engine (e.g., when the steam pressure is within a predetermined value or range), no fuel is provided along the fuel supply line 210 and the fuel injector 216, and only steam is provided along the steam supply line into the steam injector 218. In such a condition, when the engine experiences a partial loss or a full loss in the steam flow, the fuel flow along the fuel supply line 210 is caused to be introduced into the combustor, as is described in more detail with respect to FIGS. 3 and 4. When fuel is injected into the combustor in this example, the flow through the steam supply line 212 may not occur (during situations of total steam flow loss) or may be reduced as compared to the normal operating condition (during situations of partial steam flow loss).

In both of the aforementioned examples, however, fuel is supplied to the combustor through the primary fuel supply line 206 in all operating conditions to provide for the primary combustion within the combustor.

The turbine engine 10 depicted in FIGS. 1 and 2 is by way of example only. In other exemplary embodiments, the turbine engine 10 may have any other suitable configuration. For example, in other exemplary embodiments, the fan 42 may be configured in any other suitable manner (e.g., as a fixed pitch fan) and further may be supported using any other suitable fan frame configuration. Moreover, in other exemplary embodiments, any other suitable number or configuration of compressors, turbines, shafts, or a combination thereof may be provided. In still other exemplary embodiments, aspects of the present disclosure may be incorporated into any other suitable turbine engine, such as, for example, turbofan engines, propfan engines, turbojet engines, turboprop, or turboshaft engines.

FIGS. 1 and 2, therefore, illustrate a turbine engine 10 that includes both fuel injection and steam injection into the combustion section 28 of the turbine engine 10. The fuel injection includes both a primary fuel injection (e.g., a fuel injection into the combustion section 28) and a secondary fuel injection (e.g., a fuel injection downstream of the primary fuel injection). The secondary fuel injection is combined with steam injection. In the example of FIG. 1, the secondary fuel injection is combined with steam injection prior to being injected into the combustion section 28. In the example of FIG. 2, the secondary fuel injection is combined with steam injection at or within the combustion section 28. FIGS. 3 and 4 illustrate schematic diagrams of systems that may accomplish the fuel and steam systems 100 and 200 described with respect to FIGS. 1 and 2, respectively.

Referring now to FIG. 3, a fuel and steam system 300 may be employed for the fuel and steam system 100 described with respect to FIG. 1 to achieve the injection of fuel and steam within the combustion section 28 of the turbine engine 10. The fuel and steam system 300 includes a fuel system 302 and a steam system 304.

The fuel system 302 includes a fuel supply line 306 and a fuel injector 308. The fuel injector 308 (illustrated schematically) introduces the fuel flow from the fuel supply line 306 to a primary zone 28a of the combustor of the combustion section 28. The primary zone 28a, as will be described in more detail to follow, is defined between a forward end of the combustor of the combustion section 28 and a dilution opening (not depicted) within a wall of the combustor. The fuel system 302 includes a fuel supply line 310 for introducing a fuel flow to a secondary zone 28b of the combustor of the combustion section 28. The secondary zone 28b, as will be described in more detail to follow, is defined between the dilution opening (not depicted) and a distal end of the combustor. The fuel supply line 310 includes a fuel flow control device 320 for controlling the fuel flow from the fuel system (e.g., from the fuel tank) to the secondary zone 28b. That is, the fuel flow control device 320 may control the rate, the volume, the on/off nature, or combinations thereof, of the fuel flow along the fuel supply line 310. In some examples, the fuel flow control device 320 is a valve.

The fuel flow along the fuel supply line 310 is combined with a steam flow from a steam supply line 312 (from the steam system 304) prior to being injected into the secondary zone 28b. The combined fuel flow and steam flow form a fuel-steam flow along a fuel-steam supply line 314. The fuel-steam flow is introduced to the secondary zone 28b from the fuel-steam supply line 314 with a fuel-steam injector 316 (illustrated schematically).

As discussed previously, the steam system 304 may include a heat recovery system 322 to recover some of the energy from the waste heat of the exhaust. The steam system 304 recovers the energy by generating steam to drive a steam turbine 324, which inputs additional work into the LP turbine 34 via a flow path 326. The heat recovery system 322 may capture steam from the jet exhaust nozzle section 36 along a flow path 328. The heat recovery system 322 may provide steam along a flow path 330 to the steam turbine 324. Thus, after flowing through the steam turbine 324, the steam may be injected into the combustor of the combustion section 28 via the steam supply line 312. The heat recovery system 322, the steam turbine 324, or both, are optional and may be omitted. When omitted, the steam system 304 includes another steam source for supplying steam along the steam supply line 312.

The fuel and steam system 300 includes a sensor system 332 and a controller, such as an engine controller 334. The sensor system 332 is arranged to sense a pressure at an outlet of the LP turbine 34, as illustrated by sensor line 336 and is arranged to sense a pressure of the steam supply line 312, as illustrated by sensor line 338. The sensor line 336 and the sensor line 338 are data or communication lines and are representative of the sensor system 332 monitoring the pressure at the respective points. In some examples, the sensor system 332 may include a sensor at each of the outlet of the LP turbine 34 and the steam supply line 312, which communicate with the engine controller 334. The sensor(s) may be one or more pressure sensors. Additionally, or alternatively, the sensor system 332 may include other sensors, such as flow rate sensors.

The fuel system 302 may be communicatively and operatively coupled to the engine controller 334 for the turbine engine 10 (FIG. 1) along a communication line 346. The engine controller 334 is configured to operate various aspects of the turbine engine 10, including, in the embodiments discussed herein, the fuel system 302. The engine controller 334 may be a Full Authority Digital Engine Control (FADEC). In this embodiment, the engine controller 334 is a computing device having one or more processors 340 and one or more memories 342. The processor 340 may be any suitable processing device, including, but not limited to, a microprocessor, a microcontroller, an integrated circuit, a logic device, a programmable logic controller (PLC), an application-specific integrated circuit (ASIC), and/or a Field Programmable Gate Array (FPGA). The memory 342 may include one or more computer-readable media, including, but not limited to, non-transitory computer-readable media, a computer-readable nonvolatile medium (e.g., a flash memory), a RAM, a ROM, hard drives, flash drives, and/or other memory devices.

The memory 342 may store information accessible by the processor 340, including computer-readable instructions that may be executed by the processor 340. The instructions may be any set of instructions or a sequence of instructions that, when executed by the processor 340, causes the processor 340 and the engine controller 334 to perform operations. In some embodiments, the instructions may be executed by the processor 340 to cause the processor 340 to complete any of the operations and functions for which the engine controller 334 is configured, as will be described further below. The instructions may be software written in any suitable programming language, or may be implemented in hardware. Additionally, and/or alternatively, the instructions may be executed in logically and/or virtually separate threads on the processor 340. The memory 342 may further store data that may be accessed by the processor 340.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between components and among components. For instance, processes discussed herein may be implemented using a single computing device or multiple computing devices working in combination. Databases, memory, instructions, and applications may be implemented on a single system or distributed across multiple systems. Distributed components may operate sequentially or in parallel.

The engine controller 334 may be communicatively coupled to one or more sensors of the sensor system 332 along a communication line 344 to receive an input from the sensor system 332, and, based on the input received from the one or more sensors of the sensor system 332, the engine controller 334 is configured to control the fuel flow through the fuel supply line 310, by means of controlling, either directly or indirectly, the fuel flow control device 320. In some examples, the sensor system 332 detects or senses pressures at one or more locations in the fuel and steam system 300 or in the turbine engine 10. If the sensor system 332 indicates a predetermined pressure or a pressure within a predetermined pressure range or above or below a predetermined pressure threshold, the engine controller 334 opens, closes, partially opens, or partially closes the fuel flow control device 320 to introduce, not to introduce, or to control a flow rate of introduction of the fuel flow into the combustor of the combustion section 28, as is described in more detail to follow.

Accordingly, the engine controller 334 may be in two-way communication with each of the fuel system 302 and the sensor system 332. For example, the engine controller 334 may receive, and optionally store or record, pressure from one or more sensors of the sensor system 332 located at the LP turbine (e.g., via sensor line 336), pressure from one or more sensors of the sensor system 332 located at the steam supply line 312 (e.g., via sensor line 338), pressure from the one or more sensors at both locations, pressure from another location with the fuel and steam system 300, or pressure from another location with the turbine engine 10. The engine controller 334 may control the flow rate of the fuel through the fuel supply line 310 based on the information or data sensed or detected with the sensor system 332. The engine controller 334 is also in communication with the fuel system 302, and, in particular, with the fuel flow control device 320. The engine controller 334 may open, close, partially open, or partially close, the fuel flow control device 320 to control the flow rate of the fuel to the combustor of the combustion section 28, as will be described in more detail to follow.

During operation of a turbine engine (e.g., the turbine engine 10 described with respect to FIG. 1) employing the fuel and steam system 300 described with respect to FIG. 3, the sensor system 332 is employed to monitor the pressure (or the flow rate as described herein) of the steam system 304. The pressure at the outlet of the LP turbine 34 is monitored (e.g., indicated by sensor line 336) or the pressure at the steam supply line 312 is monitored (e.g., indicated by sensor line 338) or both are measured. By measuring or monitoring the pressure at these two locations, the sensor system can provide an indication of whether there is a loss of pressure in the steam system 304 from the LP turbine outlet to the injection at the fuel-steam injector 316. That is, for example, if the pressure at the sensor line 338 is zero, then the sensor system 332 is sensing a condition of total steam loss in the steam system 304. If the pressure at the sensor line 338 is lower than the pressure at the sensor line 336, then the sensor system 332 is sensing a condition of a partial steam loss in the steam system 304. The sensor system 332 may communicate the condition as an input to the controller 334. As described in more detail to follow, the condition sensed by the sensor system 332 determines the state of the fuel system 302 and the flow rate of the fuel through the fuel system 302.

Once the sensor system 332 detects the condition of the steam system 304, the fuel flow control device 320 is actuated to open or to close, based on the steam system condition. The fuel flow control device 320 may be automatically controlled based on the pressure in the steam system 304. For example, the pressure change in the steam system 304 may cause the fuel flow control device 320 to open or close to augment the fuel flow to the combustor. In such an example, the controller 334 and the sensor system 332 may be omitted.

In some examples, the fuel flow control device 320 may be automatically controlled based on the pressure in the steam system 304 or may be controlled to do so, such as, for example, with the controller 334. Once the controller 334 receives the sensor input, the controller 334 determines whether to augment the fuel flow through the fuel supply line 310, and if augmentation is desired, the controller 334 determines the degree of augmentation. For example, a predetermined pressure threshold or a predetermined pressure range may be set prior to operation of the turbine engine. During operation of the fuel and steam system 300, if the controller 334 receives input from the sensor system 332 that the sensed pressure of the steam system is outside of (e.g., at least five percent to twenty percent below) the predetermined threshold or range of the initial operating pressure of the steam system, the controller 334 may control the fuel system 302 to supply the secondary fuel flow to the combustor of the combustion section 28. The controller 334 actuates the fuel flow control device 320 to open, to close, to partially open, or to partially close, to admit a desired flow rate or volume of fuel flow into the combustion section 28. The flow rate of the fuel introduced may be based on the amount of steam loss detected (e.g., the detected condition). In some examples, the amount of fuel or the flow rate of the fuel introduced increases as the loss of steam increases such that a higher percentage of steam loss results in a higher rate or amount of fuel introduced into the combustor.

In other words, the fuel system 302 provides a primary fuel flow through the primary fuel supply 306 and a secondary fuel flow through the secondary fuel supply 310. The fuel system 302 includes a first sate in which there is a first flow rate of the secondary fuel flow to the combustor of the combustion section 28 and a second state in which there is a second flow rate of the secondary fuel flow to the combustor. The first flow rate and the second rate may be the same or may be different. In some examples, the first state and the first flow rate may be arranged such that there is zero flow rate such that no secondary fuel flow is provided to the combustor (e.g., the fuel flow control device is closed). Such a condition may be when the steam system 304 is operating at the predetermined pressure threshold or the turbine engine 10 is operating at a predetermined power output, or both. In such an example, the secondary fuel flow may not be required. The second state and the second flow rate may be arranged such that there is a greater flow rate than the first flow rate (e.g., the fuel flow control device is open). Such a condition may be when the steam system 304 is operating below the predetermined pressure threshold or the turbine engine 10 is operating below the predetermined power output. In such an example, the secondary fuel flow may be required to maintain or improve the power out of the turbine engine. This is described in more detail to follow.

In examples when the fuel flow control device 320 automatically provides fuel to the combustion section 28 based on the pressure in the steam system 304, the fuel flow control device 320 may be a valve that is actuated based on a pneumatic signal or a hydraulic signal from the steam system 304. For example, steam pressure may act against (e.g., push against) a valve closure device within the fuel flow control device 320. When the steam pressure is at a predetermined level, the valve closure device maintains the fuel flow control device 320 in a closed position. As the steam pressure increase or decreases based on the conditions of the steam system 304, the valve closure device may open to permit passage of fuel through the fuel flow control device 320. The conditions that may open or close the fuel flow control device 320 are discussed in more detail to follow.

In examples when the fuel flow control device 320 is controlled via the controller 334, an electric signal from the controller 334 causes an actuator (not illustrated) to open or close a valve closure device within the fuel flow control device 320, based on the particular condition, as discussed in more detail to follow. In some examples, the fuel flow control device 320 may thus be a solenoid valve.

The predetermined pressure threshold or predetermined pressure range may be, or may be based at least in part on, a predetermined pressure difference between the sensor line 336 and the sensor line 338, a predetermined pressure or pressure range for the sensor line 336, or a predetermined pressure or pressure range for the sensor line 338, or any combination thereof. The predetermined pressure threshold or the predetermined pressure range may vary through the operation of the turbine engine such that during certain operating conditions (e.g., take-off, flight or cruise, or landing), the predetermined pressure range or threshold is based on an expected steam pressure or expected power range during that particular operation condition. Accordingly, the predetermined pressure threshold or predetermined pressure range may be different during different phases of operation of the engine. In some examples, the predetermined pressure range or threshold may be the same through all operating conditions. Although described as predetermined pressures, the predetermined values to which the sensed values are compared may be other parameters, such as power output, temperature, etc.

During operation of the turbine engine 10 previously described, fuel is introduced along the primary fuel supply line 106 and primary fuel injector 108 continuously to achieve normal combustion for operation of the engine. The fuel flow along the primary fuel supply line 106 is not augmented based on the conditions of the steam system. Instead, the fuel flow along the primary fuel supply line 106 is based on the desired operating condition of the engine or is constant based on a predetermined value.

As described herein, "partial loss" refers to a loss of at least five percent to one hundred percent, not including one hundred percent, and in some examples, partial loss refers to a loss of at least five percent to twenty percent of the predetermined value or predetermined range. A "total loss" refers to a loss of one hundred percent of the predetermined value or predetermined range.

The supply of steam flow to the combustor of the combustion section 28 inputs additional work to the LP turbine 34. Thus, when the turbine engine 10 (FIG. 1) is operating with steam injection into the combustor, the power output of the turbine engine 10 is increased as compared to an engine without steam injection into the combustor. Since the turbine engine 10 operates with this steam injection, if there is a loss of steam pressure, there will be a corresponding loss in power in the turbine engine 10. Accordingly, the controller 334 detects this loss of pressure (or as noted below, may detect the loss of power) by way of the sensor system 332 to determine a condition of the steam system 304. The controller 334 compensates for the loss of steam by increasing the flow rate of the secondary fuel flow to the combustor (e.g., by actuating the fuel flow control device 320). The additional flow of the secondary fuel flow to the combustor allows for additional combustion within the combustor to provide additional work to the LP turbine 34. The fuel flow control device 320 may be opened to a desired degree (e.g., fully open or partially open) to achieve the desired fuel flow rate that allows for the desired combustion to counteract the loss in power and steam and, to maintain or to improve the engine operation. That is, the flow rate of the secondary fuel flow may be augmented based on the condition of the steam flow. For example, a first condition of the steam system may result in the fuel system 302 having a first state with a first flow rate of the secondary fuel flow and a second condition of the steam system may result in the fuel system 302 having a second state with a second flow rate of the secondary fuel flow. Depending on the condition of the steam system, the first flow rate and the second flow rate may be the same or may be different.

In some examples, the fuel flow through the fuel supply line 310 may occur only when there is a loss in steam or a loss in power. That is, during normal operation (e.g., operation of the steam system is at an initial operating pressure that is within the predetermined levels), only steam may be supplied to the combustor of the combustion section 28. In such a condition, the fuel flow control device 320 is in a closed position and no secondary fuel flow is provided to the combustor. Only when the controller 334 determines there is a loss in steam or a loss in power is the fuel flow control device 320 opened (either partially or fully) to introduce the secondary fuel flow into the combustor to counteract the power loss.

In other examples, the introduction of fuel to the combustor through the fuel supply line 310 occurs simultaneously with the introduction of fuel to the combustor through the steam supply line 312. That is, during normal operation, both fuel and steam are supplied to the combustor of the combustion section 28. In such a condition, the fuel flow control device 320 is at least partially open. When the controller 334 determines there is a loss in steam or a loss in power, the fuel flow control device 320 may be opened to a greater degree (either partially or fully) to introduce fuel into the combustor to counteract the power loss. The loss in steam detected by the controller 334 may be a loss of steam pressure (e.g., when the sensor system 332 includes pressure sensors), or a loss in flow rate of the steam (e.g., when the sensor system 332 includes flow rate sensors), or a combination of both.

FIG. 4 illustrates a fuel and steam system 400 that may be employed for the fuel and steam system 200 described with respect to FIG. 2 to achieve the injection of fuel and steam within the combustion section 28 of the turbine engine 10. The fuel and steam system 400 includes a fuel system 402 and a steam system 404. The fuel and steam system 400 is substantially similar to the fuel and steam system 300 described with respect to FIG. 3, with the exception of the manner in which the fuel flow and the steam flow are introduced into the secondary zone 28b of the combustor of the combustion section 28. Accordingly, the same reference numerals will be used for components of the fuel and steam system 400 that are the same as or similar to the components of the fuel and steam system 300 discussed above. The description of these components above also applies to this embodiment, and a detailed description of these components is omitted here.

The fuel and steam system 400, therefore, includes a fuel system 402 and a steam system 404. The fuel system 402 is the same as the fuel system 302, except that a fuel supply line 410 introduces a fuel flow to the secondary zone 28b with a fuel injector 416 (illustrated schematically). As in the fuel and steam system 300, the fuel supply line 410 is provided with the fuel flow control device 320 in communication with the engine controller 334. The steam system 404 is the same as the steam system 304, except that a steam supply line 412 introduces a steam flow to the secondary zone 28b with a steam injector 418. The steam injector 418 and the fuel injector 416 are separate and axially spaced from one another. In contrast, in the fuel and steam system 300, the fuel flow and the steam flow are combined such that the fuel-steam injector 316 is a combined injector of the fuel and the steam. As in the fuel and steam system 300, the fuel flow through the fuel supply line 410 is controlled by the engine controller 334 based on inputs received from the sensor system 332. The control may be achieved by control, either directly or indirectly, of the fuel flow control device 320 provided along the fuel supply line 410.

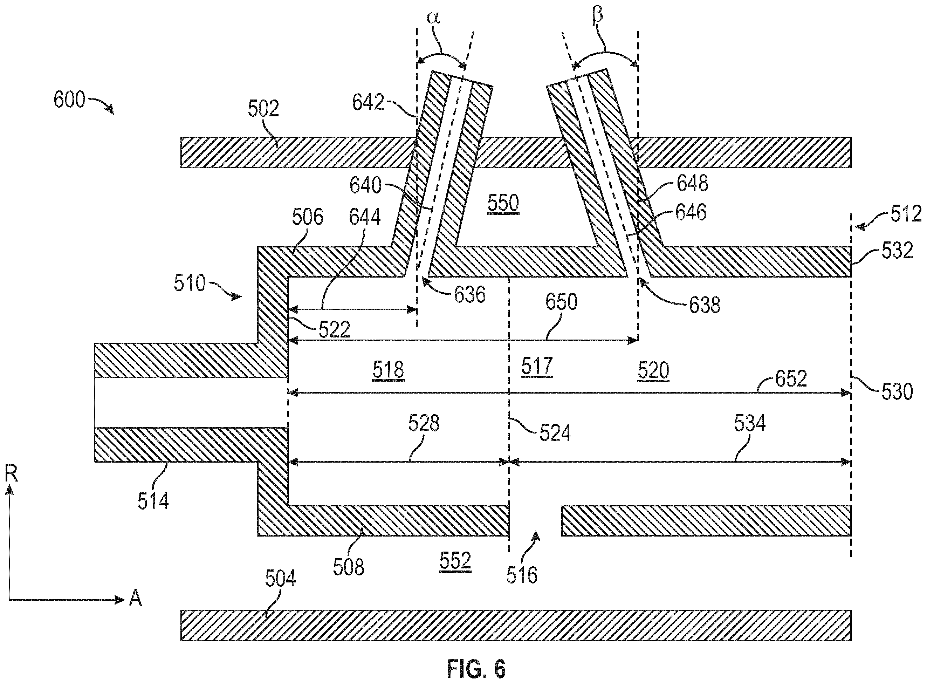

Although illustrated as introducing the fuel flow into the secondary zone 28b, in some examples, the fuel and steam system 400 may introduce fuel into the primary zone 28a, such as described with respect to FIG. 6.

Operation of the fuel and steam system 400 is the substantially the same as operation of the fuel and steam system 300. The only difference being that instead of comingling or combining the fuel flow and the steam flow prior to introduction into the combustor, the fuel flow and the steam flow are introduced to the combustor along separate, independent lines (e.g., along the fuel supply line 410 and the steam supply line 412, respectively).

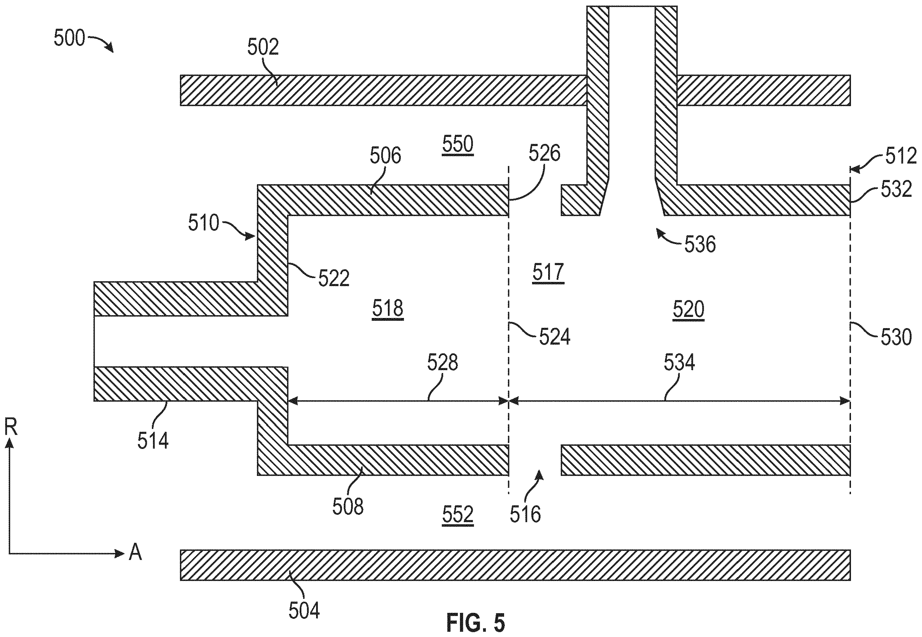

FIGS. 5 to 10 illustrate various exemplary embodiments of combustors and injectors for introducing the fuel and the steam into the combustion section 28 as described with respect to FIGS. 1 to 4.

FIG. 5 illustrates a schematic cross-sectional view of a combustor 500. The combustor 500 may be included in the combustion section 28 of FIG. 1 or FIG. 3 to provide a combined fuel-steam flow to a secondary zone, as previously described. The combustor has an outer casing 502 and an inner casing 504. Within the outer casing 502 and the inner casing 504, the combustor 500 includes an outer liner 506 and an inner liner 508. The combustor 500 includes a forward end 510 and an aft end 512. The forward end 510 may be the dome of the combustor 500. At the forward end 510, the combustor 500 includes a swirler 514. The swirler 514 introduces air and fuel to an interior 517 of the combustor 500 (e.g., the area between the outer liner 506 and the inner liner 508). Considering FIG. 5 in conjunction with FIGS. 1 and 3, the swirler 514 may introduce the fuel provided along the fuel supply line 106 and the fuel supply line 306, respectively. Therefore, the fuel injector 108 and the fuel injector 308 may be provided with the swirler 514 to introduce the fuel into the interior 517 of the combustor 500.

The combustor 500 includes one or more dilution openings 516. As illustrated in FIG. 5, the one or more dilution openings 516 may be provided in the inner liner 508 and in the outer liner 506. Although one dilution opening 516 is illustrated in each liner, more may be provided, for example, along the circumferential or axial direction of the outer liner 506, the inner liner 508, or both the outer liner 506 and the inner liner 508. The one or more dilution openings 516 introduce air to the interior 517 of the combustor 500. The air introduced through the one or more dilution openings 516 is provided from an outer passage 550 between the outer liner 506 and the outer casing 502 and an inner passage 552 between the inner liner 508 and the inner casing 504.

The interior 517 of the combustor 500 includes a primary zone 518 and a secondary zone 520 within the interior 517 of the combustor 500. The primary zone 518 is defined in the axial direction A by a primary zone dimension 528 that extends between an interior surface 522 and a first axis 524. The interior surface 522 is an interior surface of a forward wall at the forward end 510 of the combustor 500. The first axis 524 extends through a forward end 526 of the one or more dilution openings 516. The secondary zone 520 is defined in the axial direction A by a secondary zone dimension 534 that extends between the first axis 524 and a second axis 530. The second axis 530 extends through an aftmost end 532 of the combustor 500. Considering FIG. 5 in conjunction with FIGS. 3 and 4, the primary zone 518 aligns with the primary zone 28a and the secondary zone 520 aligns with the secondary zone 28b.

The combustor 500 includes a fuel-steam injector 536 within the outer liner 506, which may be employed as the fuel-steam injector 116 described with respect to FIG. 1 or the fuel-steam injector 316 described with respect to FIG. 3. The fuel-steam injector 536 introduces a combined fuel-steam flow into the secondary zone 520. In such an example, the secondary fuel flow and the steam flow are introduced at the same axial location along the length of the combustor 500. The fuel-steam injector 536 may include a nozzle shape (e.g., an expanding cross-sectional shape) at the end of the fuel-steam injector 536 for introducing the fuel-steam flow into the secondary zone 520. Although an expanding cross-sectional shape is illustrated, other shapes are contemplated, such as, for example, right circular cylindrical cross-sectional shape, or other converging or diverging cross-sectional shapes. Furthermore, such shapes are contemplated for either or both of the fuel injection and the steam injection into the combustors of any of the embodiments described herein.

FIG. 6 illustrates a schematic cross-sectional view of a combustor 600. The combustor 600 may be included in the combustion section 28 of FIG. 2 or FIG. 4 to provide a separated fuel flow and steam flow to a secondary zone, as previously described. The combustor 600 is substantially similar to the combustor 500, with the exception of the manner in which the fuel flow and the steam flow are introduced into the secondary zone. Accordingly, the same reference numerals will be used for components of the combustor 600 that are the same as or similar to the components of the combustor 500 discussed above. The description of these components above also applies to this embodiment, and a detailed description of those components is omitted herein.

Considering FIG. 6 in conjunction with FIGS. 2 and 4, the swirler 514 may introduce the fuel provided along the fuel supply line 206 and the fuel supply line 306, respectively. Therefore, the fuel injector 208 and the fuel injector 308 may be provided with the swirler 514 to introduce the fuel into the combustor 600. The combustor 600 includes a fuel injector 636 and a steam injector 638. The fuel injector 636 is separate from the steam injector 638. The fuel injector 636 is located forward of or upstream of the steam injector 638. The fuel injector 636 has a longitudinal centerline axis 640 extending through a center of the fuel injector 636. The fuel injector 636 is angled with respect to the outer liner 506 at an angle α. The angle α is defined between the longitudinal centerline axis 640 and a vertical axis 642. The vertical axis 642 is perpendicular to the longitudinal centerline axis 12 (FIG. 1) of the turbine engine 10. As illustrated in FIG. 6, the vertical axis 642 extends through a center of an outlet of the fuel injector 636. A distance 644 defining the axial distance of the fuel injector 636 from the forward end 510 of the combustor 600 may be defined between the interior surface 522 and the vertical axis 642.

The steam injector 638 has a longitudinal centerline axis 646 extending through a center of the steam injector 638. The steam injector 638 is angled with respect to the outer liner 506 at an angle β. The angle β is defined between the longitudinal centerline axis 646 and a vertical axis 648. The vertical axis 648 is perpendicular to the longitudinal centerline axis 12 (FIG. 1) of the turbine engine 10. As illustrated in FIG. 6, the vertical axis 648 extends through a center of an outlet of the steam injector 638. A distance 650 defining the axial distance of the steam injector 638 from the forward end 510 of the combustor 600 may be defined between the interior surface 522 and the vertical axis 648. A distance 652 defining the total axial length of the combustor 600 is defined between the interior surface 522 and the aftmost end 532 of the combustor 600. The fuel injector 636 and the steam injector 638 may be angled in opposing directions.

The fuel injector 636 may be employed as the fuel injector 216 described with respect to FIG. 2 and the fuel injector 416 described with respect to FIG. 4. The steam injector 638 may be employed as the steam injector 218 described with respect to FIG. 2 and the steam injector 418 described with respect to FIG. 4. The fuel injector 636 introduces the fuel flow into the primary zone 518 upstream of the steam injector 638, which introduces the steam flow into the secondary zone 520. The fuel injector 636, the steam injector 638, or both the fuel injector 636 and the steam injector 638 may include a nozzle shape at the end of the body for introducing the respective fuel flow and steam flow into the combustor 600.

In the example of FIG. 6, the fuel injector 636 may be positioned in the primary zone 518 such that the distance 644 is from ten percent to sixty percent of the combustor length, represented by the distance 652. The distance 644 is selected to be within the aforementioned range to define the fuel injector 636 with respect to the dome (e.g., the forward end 510) of the combustor and the turbine (e.g., the HP turbine 32) such as to optimize combustion efficiency. Locating the fuel injector 636 closer than ten percent to the forward end 510 causes fuel wetting on the forward end 510 and high dome temperatures. Locating the fuel injector 636 greater than sixty percent results in a high exit temperature profile for the combustor and a reduction in combustion efficiency.

The steam injector 638 is positioned in the secondary zone 520 such that the distance 650 is from thirty percent to ninety percent of the combustor length, represented by the distance 652. The distance 650 is selected within the aforementioned range to define the steam injector 638 such as to optimize effectiveness of flame quenching in desired regions for lowering NO_{X} emissions from the combustor 600. To reduce NO_{X} emissions, steam is targeted to be injected through the steam injector 638 in high temperature regions in the primary zone 518 and the secondary zone 520. Locating the steam injector 638 too close to the flame location/dome (e.g., less than thirty percent) will cause the flame to quench and eventually flameout.

The angle α is from forty-five degrees to negative forty-five degrees with respect to the vertical axis 642. The angle α illustrated in FIG. 6 is about forty-five degrees. Increasing the angle α greater than forty-five degrees (in either direction with respect to the vertical axis 642) results in a flame closer to liner, resulting in high liner temperatures, which causes durability challenges to liner (e.g., the outer liner 506 and the inner liner 508).

The angle β is from negative thirty degrees to sixty degrees with respect to the vertical axis 648. The angle β illustrated in FIG. 6 is about negative thirty degrees. The steam is injected through the steam injector 638 in regions of the interior 517 of the combustor 600 that exhibit higher temperatures. The majority of these regions are typically in core region of the combustor 600. There are regions of high temperature close to the liners as well (e.g., the outer liner 506 and the inner liner 508). Therefore, maintaining the angle β within the aforementioned takes into account geometric constraints for nozzle angles and also takes into account that keeping too much steam close to the liner will not be effective utilization of steam for NOₓ reduction.

In some examples, the angle α and the angle β may be the same. In some examples, the angle α and the angle β may be mirrored. In some examples, the angle α and the angle β may be parallel. In some examples, the angle α and the angle β may be different.

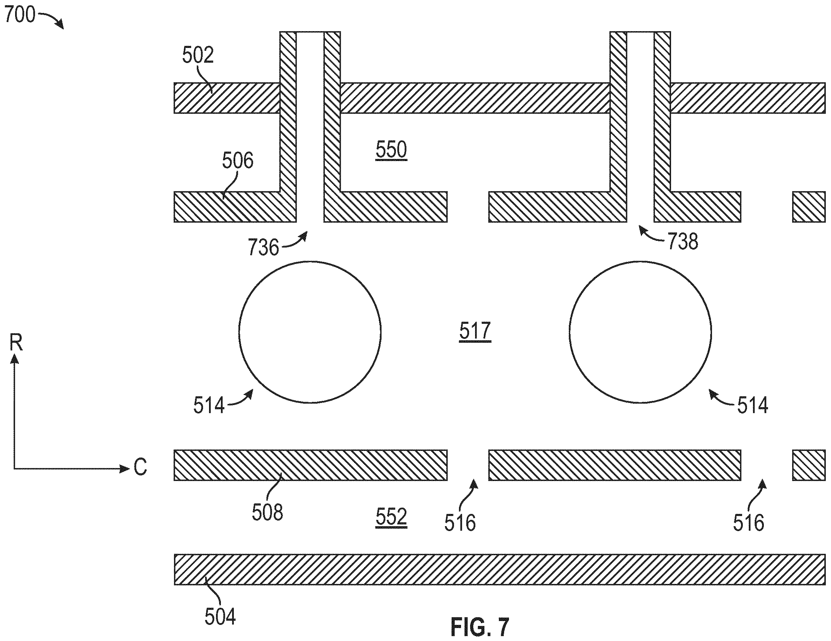

The combustor 600, therefore, includes fuel and steam injection that is aft of the primary fuel injection (e.g., through the swirler 514). The fuel and steam injection may be axially staggered, such that the steam is injected at the steam injector 638 axially downstream of the fuel injected at the fuel injector 636. Injecting the steam axially downstream of the fuel allows for the steam introduced into the combustor to reduce high temperatures created by the secondary fuel injection through the fuel injector 636. In the example of FIG. 6, the fuel injector 636 and the steam injector 638 may be at the same circumferential location or may be circumferentially offset relative to one another, as discussed with respect to FIG. 7.

FIG. 7 illustrates a schematic cross-sectional view of a combustor 700. The combustor 700 may be included in the combustion section 28 of any of FIGS. 1 to 4 for providing the fuel flow and the steam flow to the secondary zone, as previously described. The combustor 700 is substantially similar to the combustor 500 and illustrates an exemplary circumferential orientation of a fuel injector and a steam injector. The combustor of FIG. 7 is illustrated from an axial cross-sectional view taken through a radial plane extending through a dilution opening (e.g., through dilution opening 516). Accordingly, the same reference numerals will be used for components of the combustor 700 that are the same as or similar to the components of the combustor 500 discussed above. The description of these components above also applies to this embodiment, and a detailed description of those components is omitted herein.

The combustor 700 includes a fuel injector 736 and a steam injector 738. In the example of FIG. 7, the fuel injector 736 and the steam injector 738 are circumferentially staged. That is, around the circumference of the combustor 700, the fuel and the steam may be introduced at circumferentially staggered locations. In some examples, this may be an "ABAB" pattern, with the fuel injector 736 (e.g., "A" or "B") and the steam injector 738 (e.g., the other of "A" or "B") alternating in "every other" arrangement around the circumference. In some examples, the staging may have other patterns. The arrangement of the fuel injector 736 and the steam injector 738 may be based on the temperature expected within the combustor at each particular swirler 514. That is, in low temperature regions, a fuel injector 736 may be included and, in high temperature regions, a steam injector 738 may be included. In some examples, the fuel injector 736 and the steam injector 738 are at the same axial location and, in other examples, the fuel injector 736 and the steam injector 738 are both circumferentially staggered and axially staggered. The circumferential staging described with respect to FIG. 7 may be applied to any of the embodiments described herein. For example, the fuel injector 636 and the steam injector 638 described with respect to FIG. 6 may be circumferentially staged in addition to the axially staging depicted and described with respect to FIG. 6.

In the example of FIG. 7, the secondary fuel injection, also referred to as the aft fuel injection, may be circumferentially staggered with the steam injection. By injecting the steam at predetermined circumferential locations, high temperature regions may be reduced by the steam flow. By injecting the fuel at predetermined circumferential locations, low temperature regions may be increased by combustion of the fuel flow. This allows for more uniform temperature at the exit of the combustor and the inlet of the turbine section. In some examples, the steam injection may also be axially downstream of the fuel injection. In some examples, the fuel injector 736, the steam injector 738, or both may be in-line with swirler 514 (e.g., longitudinal centerlines aligned as shown in FIG. 7). In some examples, the fuel injector 736, the steam injector 738, or both may be between or misaligned with the swirlers 514. In some examples, the steam may be introduced inline with one or more swirlers and the fuel may be introduced inline with other swirlers. In some examples, both the fuel and the steam can be injected between swirlers. In some examples, the steam flow, the fuel flow, or both, may be tangentially inclined with respect to the circumferentially direction.

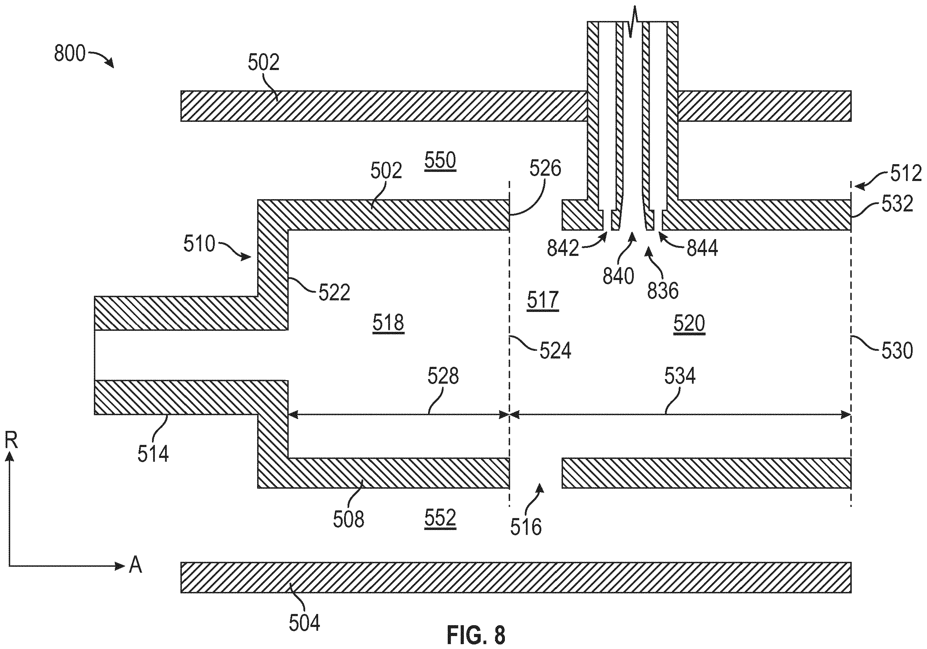

FIG. 8 illustrates a schematic cross-sectional view of a combustor 800. The combustor 800 may be included in the combustion section 28 of FIG. 2 or FIG. 4 to provide a separated fuel flow and steam flow to a secondary zone, as previously described. The combustor 800 is substantially similar to the combustor 500, with the exception of the manner in which the fuel flow and the steam flow are introduced into the secondary zone. Accordingly, the same reference numerals will be used for components of the combustor 800 that are the same as or similar to the components of the combustor 500 discussed above. The description of these components above also applies to this embodiment, and a detailed description of those components is omitted herein.

Considering FIG. 8 in conjunction with FIGS. 2 and 4, the swirler 514 may introduce the fuel provided along the fuel supply line 206 and the fuel supply line 306, respectively. Therefore, the fuel injector 208 and the fuel injector 308 may be provided with the swirler 514 to introduce the fuel into the combustor 800. The combustor 800 includes a fuel-steam injector 836 within the outer liner 506, which may be employed as the fuel injector 216 and the steam injector 218 of FIG. 2, and as the fuel injector 416 and the steam injector 418 of FIG. 4. The fuel-steam injector 836 provides a separate fuel injector and steam injector in the same.

The fuel-steam injector 836 is a combined steam and fuel injector but provides separated flows of steam and fuel to the combustor. Thus, the fuel-steam injector 836 includes a steam injector 840, a first fuel injector 842, and a second fuel injector 844. The steam injector 840 is located between the first fuel injector 842 and the second fuel injector 844. The steam injector 840 may be centrally located between the first fuel injector 842 and the second fuel injector 844. Although described as two separate fuel injectors, the first fuel injector 842 and the second fuel injector 844 may be a single, annular fuel injector circumferentially surrounding the steam injector 840. For example, the steam injector and the fuel injector can be configured as co-axial fluid lines or tubes. In such an example, the cross-sectional view shown in FIG. 8 is taken through a center of the single, annular fuel injector such that there is the appearance of two fuel injectors. The fuel-steam injector 836 introduces separate flows of fuel (along the separate fuel injectors 842, 844 or along the single, annular fuel injector) and steam (along the steam injector 840) into the secondary zone 520. One or more of the steam injector 840, the first fuel injector 842, and the second fuel injector 844 may include a nozzle shape at the end of each respective passage for introducing the fuel-steam flow into the secondary zone 520.

In some examples, the steam introduced through the steam injector 840 may be swirled to improve the mixing of products.

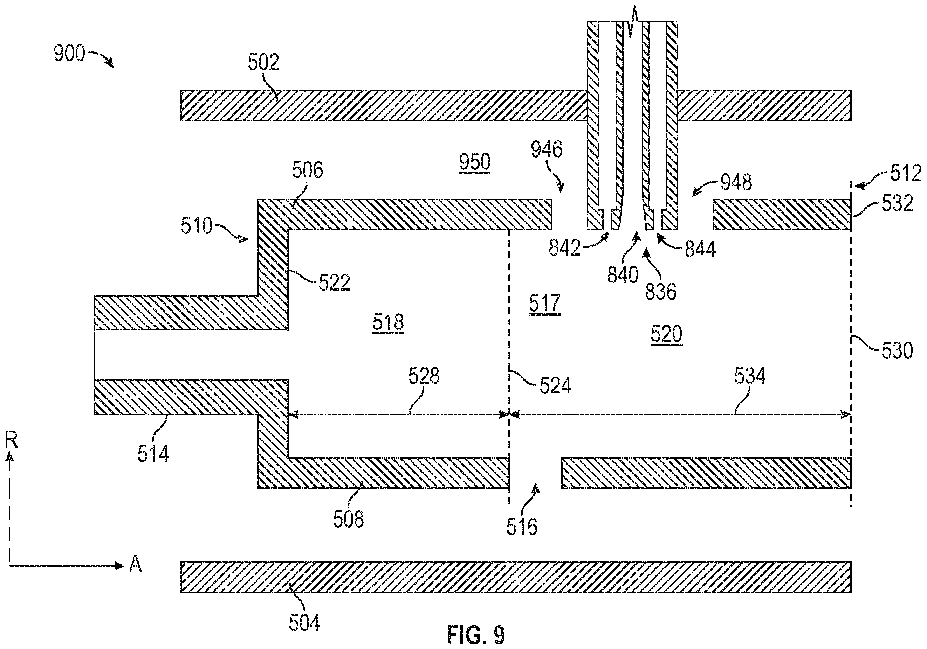

FIG. 9 illustrates a schematic cross-sectional view of a combustor 900. The combustor 900 may be included in the combustion section 28 of FIG. 2 or FIG. 4 to provide a separated fuel flow and steam flow to a secondary zone, as previously described. The combustor 900 is substantially similar to the combustor 800, with the addition of air openings around the fuel-steam injector 836. Accordingly, the same reference numerals will be used for components of the combustor 800 that are the same as or similar to the components of the combustor 800 discussed above. The description of these components above also applies to this embodiment, and a detailed description of those components is omitted herein. The air openings may be a first air opening 946 and a second air opening 948 located on an axially forward side and an axially aft side, respectively, of the fuel-steam injector 836. Although described as two air openings, the first air opening 946 and the second air opening 948 may be a single, annular air opening circumferentially surrounding the fuel-steam injector 836 (e.g., in a co-axial arrangement). In such an example, the cross-sectional view shown in FIG. 9 is taken through a center of the single, annular air opening such that there is the appearance of two air openings. The air openings 946, 948 introduce air from an air passage 950 to the secondary zone 520 around the fuel-steam injector 836. The air passage 950 may be an air passage between the outer liner 506 and the outer casing 502.

In the combustor 900, non-swirling air is introduced to the combustor via the air openings 946, 948 around the fuel-steam injector 836. The radial introduction of the non-swirling air increases the penetration of the fuel flow and the steam flow into a central area (e.g., central between the inner liner 508 and the outer liner 506) of the combustor. The direction and velocity of the air introduced pulls or moves the fuel flow and the steam flow into the central area of the combustor. By increasing the penetration of the fuel flow and the steam flow in this manner, combustion of the fuel flow from the fuel-steam injector 836 occurs closer to the core or central area of the combustor. Increasing the penetration also enables quenching of high temperatures in the core of the combustor with the steam flow.

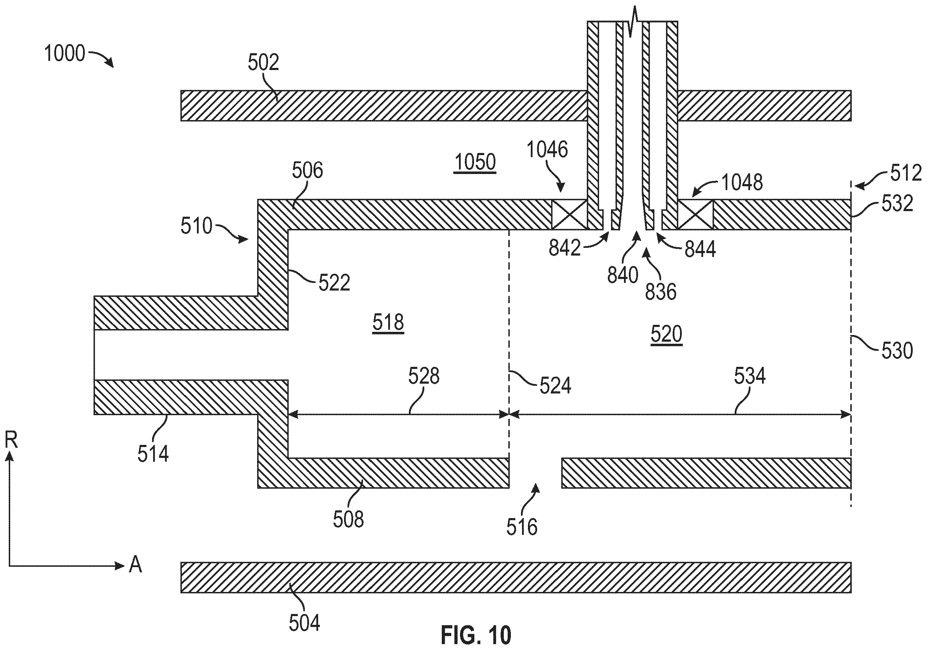

FIG. 10 illustrates a schematic cross-sectional view of a combustor 1000. The combustor 1000 may be included in the combustion section 28 of FIG. 2 or FIG. 4 to provide a separated fuel flow and steam flow to a secondary zone, as previously described. The combustor 1000 is substantially similar to the combustor 800, with the addition of swirlers around the fuel-steam injector 836. Accordingly, the same reference numerals will be used for components of the combustor 800 that are the same as or similar to the components of the combustor 800 discussed above. The description of these components above also applies to this embodiment, and a detailed description of those components is omitted herein. The swirlers may be a first swirler 1046 and a second swirler 1048 located on an axially forward side and an axially aft side, respectively, of the fuel-steam injector 836. Although described as two swirlers, the first swirler 1046 and the second swirler 1048 may be a single, annular air opening circumferentially surrounding the fuel-steam injector 836 (e.g., in a co-axial arrangement). In such an example, the cross-sectional view shown in FIG. 10 is taken through a center of the single, swirler such that there is the appearance of two swirlers. The swirlers 1046, 1048 introduce air from an air passage 1050 to the secondary zone 520 around the fuel-steam injector 836. The air passage 1050 may be an air passage between the outer liner 506 and the outer casing 502.

In the combustor 1000, swirling air is introduced to the combustor via the swirlers 1046, 1048 around the fuel-steam injector 836. The radial and swirling introduction of the swirling air increases the spread of the fuel flow and the steam flow, and increases mixing of the fuel flow and the steam flow in the combustor 1000 into a central area (e.g., central between the inner liner 508 and the outer liner 506) of the combustor. By increasing the mixing within the core of the combustor, combustion of the fuel flow is enhanced as compared to examples with no swirling air flow.

Although described with respect to FIGS. 1 to 10 as injection of steam, the system may include injection of water or injection of a combination of water and steam into the combustor. In examples with water injection, the monitoring may include monitoring of the pressure of the injected water or the pressure of the water along a water supply line, and the fuel augmentation may be based on the monitored pressure.

As described with respect to FIGS. 5 to 10, the secondary zone 520 is defined as the area of the combustor that is post dilution opening, that is, downstream of the dilution opening. This definition may apply for some combustors, such as, for example, rich burn combustors. In some examples, such as for lean burn combustors, the secondary zone 520 may be defined as being at least fifty percent of the full combustor length.

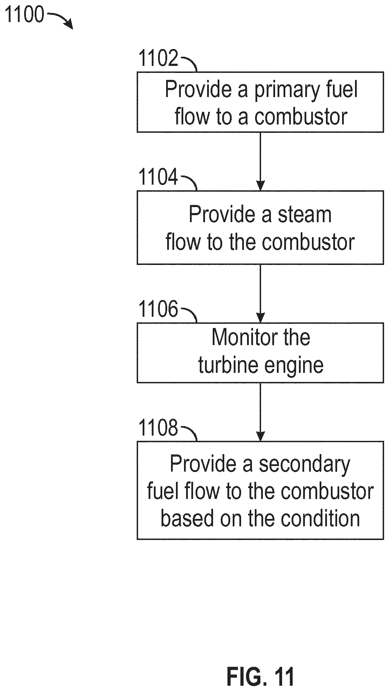

FIG. 11 illustrates an exemplary method 1100 of operating a turbine engine having any of the fuel-system systems described with respect to FIGS. 1 to 10.

In the method 1100, step 1102 provides a primary fuel flow to the combustor of the turbine engine. The primary fuel flow is combusted with compressed air to generate combustion gases within the combustor to generate thrust, as described previously herein. In some examples, step 1102 includes injecting the primary fuel flow into a forward end of the combustor to generate the combustion gases. The step 1102 may include the primary fuel flow being not based on the pressure of the steam flow. The step 1102 may include the primary fuel flow being introduced into the combustor in a primary zone of the combustor.

At step 1104, a steam flow is introduced into the combustor as described previously herein. The steam flow has an initial operating condition. In some examples, step 1104 includes the steam flow being introduced into a secondary zone of the combustor. The step 1104 may include generating the steam flow from a heat recovery system. The step 1104 may include providing the steam flow from a steam source.

At step 1106, the method monitors the turbine engine to determine a condition of the turbine engine or a condition of the steam system. The monitoring may include monitoring pressure of the steam system, monitoring flow rate of the steam in the steam system, monitoring the power output of the turbine engine, or any combination thereof. In some examples, step 1106 includes monitoring the pressure of the steam flow to generate a monitored pressure, detecting the loss in pressure of the steam flow when the monitored pressure is below a predetermined pressure value, and injecting the secondary fuel flow into the combustor based on the detecting of the loss in pressure of the steam flow. The step 1106 may include monitoring a power output of the turbine engine to generate a monitored power output, detecting the loss in power output of the turbine engine when the monitored power output is below a predetermined power value, and injecting the secondary fuel flow into the combustor based on the detecting of the loss in power output in the turbine engine or both.

At step 1108 a secondary fuel flow is introduced to the combustor. The flow rate of the secondary fuel flow is based on a condition detected in step 1106. The condition may be a pressure loss in the steam flow or a power output loss of the turbine engine or both. A pressure loss is detected when the monitored pressure is below a predetermined pressure value. A power output loss is detected when the monitored power out is below a predetermined power value.

In some examples, injecting the secondary fuel flow in step 1108 only occurs when the detected loss in pressure of the steam flow exists. That is, no secondary fuel flow is introduced when there is no detected pressure loss. In some examples, the method does not inject the secondary fuel flow into the combustor at step 1108 based on a monitored pressure being at or above the predetermined value. During step 1108, controlling the secondary fuel flow may occur with a fuel flow control device. A controller may control the fuel flow control device.

As described herein, step 1108 may include injecting the secondary fuel flow upstream of the steam flow. The step 1108 may include controlling a fuel flow control device to inject the fuel flow. The step 1108 may include controlling the fuel flow control device being performed with a controller. The step 1108 may include introducing non-swirling air with the secondary fuel flow or the steam flow or both the secondary fuel flow and the steam flow into the combustor. The step 1108 may include introducing swirling air with the secondary fuel flow or the steam flow or both the secondary fuel flow and the steam flow into the combustor. The step 1108 may include the steam flow and the secondary fuel flow being introduced to the combustor simultaneously. In some examples, step 1108 includes the secondary fuel flow being only introduced when a loss in pressure in the steam flow exists. The step 1108 may include the secondary fuel flow being introduced into a secondary zone of the combustor. The step 1108 may include injecting the secondary fuel flow downstream of the primary fuel flow.

In some examples, step 1108 includes injecting a secondary steam flow and the secondary fuel flow into the combustor through separate fuel injectors. The step 1108 may include injecting a secondary steam flow and the secondary fuel flow into the combustor through a single fuel injector. In some examples, the single fuel injector having separate flow paths for the secondary steam flow and the secondary fuel flow that are not fluidly connected. The step 1108 may include injecting a secondary steam flow and the secondary fuel flow into the combustor through a single fuel injector, the secondary steam flow and the secondary fuel flow being mixed together within the single fuel together in the same flow path before being injected into the combustor.

In some examples, the method includes the fuel flow and the steam flow being angled with respect to a vertical axis perpendicular to a centerline axis of the combustor. In some examples, the angle being tangential to the combustor.

The term "injector" is used throughout the description and is not intended to limit the structure of the introduction of fuel or steam into the combustor. In some examples, the injector may be a nozzle.

Although described herein as injecting the secondary fuel flow only forward of the steam flow or injecting the secondary fuel flow both forward and aft of the steam flow, the secondary fuel flow may be introduced only aft of the steam flow. Although a single fuel supply line and fuel injector, and a single steam supply line and steam injector (whether combined or separate) are shown, more may be provided. The injectors of the present disclosure are illustrated and described in some examples as introducing in a purely radial direction. Angled introduction or tangential introduction (e.g., tangential with respect to the liner surface) is contemplated.

Although described with fuel and steam introduced in the secondary zone, either or both of the fuel flow and the steam flow may be introduced in the primary zone.

In some examples, the steam flow, the fuel flow, or both the steam flow and the fuel flow may be swirled prior to introduction or during introduction into the combustor.

The fuel and steam system of the present disclosure is described with respect to several examples of fuel introduction, steam introduction, injector location, injector structure, separate injectors, combined injectors, separate flows, combined flows, axial staggering, circumferential staggering, etc. Each of the examples described herein may be combined with other examples described herein without departing from the scope of the present disclosure.

The present disclosure, therefore, provides for fuel and steam systems that inject a fuel flow and a steam flow into the secondary zone of the combustor. Such a system allows for improved specific fuel consumption, NOₓ reduction, smoke reduction, lower dynamics, and allows for sustained engine power during situations with partial loss or total loss of steam as compared to turbine engines without both fuel and steam injected into the combustor. In some examples, the steam is extracted from the engine exhaust in a heat recovery system to be injected back into the combustor to obtain the specific fuel consumption benefit and NOₓ reduction.

Additionally, the present disclosure provides for a fuel and steam system that allows for controlling of the fuel injection into the secondary zone. If there is a partial loss or a total loss of steam injection into the secondary zone during engine operation, there is a corresponding loss of engine power. By controlling the fuel injection into the secondary zone, power may be recovered in the case of failure of steam flow provided to the engine core by injecting additional fuel into the combustor to operate as a power augmenter. The system of the present disclosure may also be employed for systems that include steam or water injection for NOₓ improvement and power augmentation.

The fuel and steam systems of the present disclosure include control of the fuel flow depending on a sensed condition of the steam flow. For example, in situations with a partial loss or a full loss of steam flow, fuel is injected into the primary zone or the secondary zone of the combustor to recover a drop in power caused by the loss of steam. Controls may be used to detect a loss in engine power or a loss in steam pressure, and fuel may be injected to augment the power to achieve desired power/thrust levels.

In some examples, the fuel and steam system of the present disclosure includes independent steam and fuel circuits to inject steam in situations when the steam system is normally operating (e.g., no partial loss or full loss of steam) or to inject fuel when there is a loss in the steam flow. In some examples, the steam flow and fuel flow may be mixed in a mixing device and then injected into the combustor as an independent mixture of the fuel and steam. In some examples, the fuel and steam system of the present disclosure includes both steam and fuel injection at all operating condition. This may achieve an additional NOₓ reduction benefit. In such examples, either steam and fuel may be injected simultaneously through independent circuits or may be mixed, and the mixture may be injected into the combustor.

Further aspects are provided by the subject matter of the following clauses.

A turbine engine comprising a combustor positioned in a core air flow path that combusts a compressed air flow and a primary fuel flow to generate combustion gases, and a fuel and steam system fluidly coupled to the combustor, the fuel and steam system comprising a steam system for providing a steam flow along a steam supply line to the combustor, and a fuel system for providing the primary fuel flow and a secondary fuel flow to the combustor, the fuel system having a first state in which there is a first flow rate of the secondary fuel flow to the combustor and a second state in which there is a second flow rate of the secondary fuel flow to the combustor, the first flow rate and the second flow rate being different, and the first state and the second state based on a condition of the steam system.

The turbine engine of the preceding clause, the steam flow and the secondary fuel flow being provided at the same axial location along a length of the combustor.

The turbine engine of any preceding clause, the secondary fuel flow being provided upstream of the steam flow.

The turbine engine of any preceding clause, the secondary fuel flow being provided downstream of the primary fuel flow.

The turbine engine of any preceding clause, the first flow rate of the secondary fuel flow being zero such that no secondary fuel flow is provided to the combustor in the first state.

The turbine engine of any preceding clause, the second flow rate being greater than the first flow rate.

The turbine engine of any preceding clause, the steam system having an initial operating pressure, and the fuel system exhibits the second state based on a pressure of the steam system being at least five percent lower than the initial operating pressure.

The turbine engine of the preceding clause, the fuel system exhibiting the second condition based on the pressure of the steam system being at least twenty percent lower than the initial operating pressure.

The turbine engine of any preceding clause, further comprising a sensor system configured to detect a pressure of the steam system, wherein the fuel system exhibits the first state based on the pressure of the steam system being above a predetermined value and the fuel system exhibits the second state based on the pressure of the steam system being at least five percent less than the predetermined value.

The turbine engine of any preceding clause, the fuel and steam system further comprising a secondary fuel supply line for providing the secondary fuel flow to the combustor, and a fuel flow control device located along the secondary fuel supply line, the fuel flow control device configured to control the first state and the second state.

The turbine engine of any preceding clause, the fuel flow control device being closed in the first state and open in the second state.

The turbine engine of any preceding clause, further comprising a controller configured to actuate the fuel flow control device to place the fuel system in the first state or the second state.

The turbine engine of any preceding clause, the controller being configured to actuate the fuel flow control device based on a pressure of the steam system or a power output of the turbine engine.

The turbine engine of any preceding clause, the fuel system comprising a primary fuel supply line having a primary fuel injector at a forward end of the combustor, and a secondary fuel supply line having a secondary fuel injector along an axial length of the combustor.

The turbine engine of any preceding clause, the steam system further comprising a steam injector for providing the steam flow from the steam supply line at a location along the axial length of the combustor, wherein the steam injector and the secondary fuel injector are a combined fuel-steam injector.

The turbine engine of any preceding clause, the steam system further comprising the steam supply line having a steam injector for providing the steam flow along the axial length of the combustor, wherein the steam injector and the secondary fuel injector are separate.

The turbine engine of any preceding clause, the separate fuel injector and the steam injector being provided in the same body.

The turbine engine of any preceding clause, the steam system including a heat recovery system for recapturing steam from an exhaust of the turbine engine and providing the recaptured steam to a steam turbine and to the steam supply line.

The turbine engine of any preceding clause, the fuel flow control device being a valve.

The turbine engine of any preceding clause, the secondary fuel flow being introduced into a secondary zone of the combustor.

The turbine engine of any preceding clause, the secondary zone being defined between a dilution opening in the combustor and a distal end of the combustor.

The turbine engine of any preceding clause, the secondary zone being defined as at least fifty percent of a combustor length, the combustor length defined between a forward end and a distal end of the combustor.

The turbine engine of any preceding clause, the steam flow being introduced into the secondary zone.

The turbine engine of any preceding clause, the secondary fuel flow being introduced into a primary zone of the combustor.

The turbine engine of any preceding clause, the primary zone being defined between a forward end of the combustor and a dilution opening in the combustor.

The turbine engine of any preceding clause, the steam flow being introduced into the primary zone.

The turbine engine of any preceding clause, the combustor including a fuel-steam injector configured to introduce a combined flow of the secondary fuel flow and the steam flow to the combustor.

The turbine engine of any preceding clause, the combined flow comprising only steam when the fuel system is in the first state and a mixture of steam and fuel when the fuel system is in the second state.

The turbine engine of any preceding clause, the fuel-steam injector being located downstream of a dilution opening in the combustor.

The turbine engine of any preceding clause, further comprising a fuel injector for providing the secondary fuel flow and a steam injector for providing the steam flow.

The turbine engine of any preceding clause, the fuel injector being angled with respect to an axis perpendicular to a centerline axis of the combustor, wherein the angle is from forty-five degrees to negative forty-five degrees with respect to the axis.

The turbine engine of any preceding clause, the steam injector being angled with respect to an axis perpendicular to the centerline axis of the combustor, wherein the angle is from negative thirty degrees to sixty degrees.

The turbine engine of any preceding clause, the fuel injector or the steam injector or both being angled at a tangential angle to the combustor.

The turbine engine of any preceding clause, the fuel injector and the steam injector being angled in opposing directions.

The turbine engine of any preceding clause, the secondary fuel flow and the steam flow being axially staggered.

The turbine engine of any preceding clause, the secondary fuel flow and the steam flow being circumferentially staggered.

The turbine engine of any preceding clause, the secondary fuel flow being introduced into a primary combustion zone.

The turbine engine of any preceding clause, the secondary fuel flow and the primary fuel flow being provided by separate flow paths in the same injector.

The turbine engine of any preceding clause, the secondary fuel flow and the primary fuel flow being provided by the same flow path in the same injector.

The turbine engine of any preceding clause, the secondary fuel flow being provided upstream of the fuel flow.

The turbine engine of any preceding clause, further comprising air openings surrounding the secondary fuel flow and the steam flow, the compressed air being provided to the combustor through the air openings.

The turbine engine of any preceding clause, further comprising swirlers surrounding the secondary fuel flow and the steam flow, the compressed air being provided to the combustor through the swirlers.

The turbine engine of any preceding clause, further comprising a fan shaft coupled to a fan, a shaft, and a turbine positioned downstream of the combustor to receive the combustion gases and to rotate the turbine, the turbine being drivingly coupled to the fan shaft to rotate the fan shaft when the turbine rotates.

The turbine engine of any preceding clause, further comprising a sensor system configured to monitor a pressure of the steam system, the controller being configured to actuate the fuel flow control device based on the pressure of the steam system.

A method of operating the turbine engine of any preceding clause.

A method of operating a turbine engine, the method including introducing a steam flow into a combustor, monitoring a pressure of the steam flow, and injecting a fuel flow into the combustor based on the pressure of the steam flow.

A method of operating the turbine engine of any preceding clause, the method comprising introducing the steam flow into the combustor, and introducing the secondary fuel flow into the combustor based on a loss in pressure of the steam flow or a loss in power output of the turbine engine.

The method of any preceding clause, further comprising monitoring the pressure of the steam flow to generate a monitored pressure, monitoring a power output of the turbine engine to generate a monitored power output, detecting the loss in pressure of the steam flow when the monitored pressure is below a predetermined pressure value, detecting the loss in power output of the turbine engine when the monitored power output is below a predetermined power value; and injecting the secondary fuel flow into the combustor based on the detecting of the loss in pressure of the steam flow or based on the detecting of the loss in power output in the turbine engine or both.

The method of any preceding clause, injecting the secondary fuel flow into the combustor only occurring when the detected loss in pressure of the steam flow exists.

The method of any preceding clause, further comprising not injecting the secondary fuel flow into the combustor based on a monitored pressure being at or above the predetermined value.

The method of the preceding clause, injecting the fuel flow comprising injecting no fuel flow when the pressure is at or above a predetermined value and injecting the fuel flow when the pressure is at least five percent lower than the predetermined value.

The method of any preceding clause, the fuel flow being injected upstream of the steam flow.

The method of any preceding clause, further comprising controlling a fuel flow control device to inject the fuel flow.

The method of any preceding clause, controlling the fuel flow control device being performed with a controller.

The method of any preceding clause, further comprising introducing non-swirling air with the fuel flow or the steam flow or both the fuel flow and the steam flow into the combustor.

The method of any preceding clause, further comprising introducing swirling air with the fuel flow or the steam flow or both the fuel flow and the steam flow into the combustor.

The method of any preceding clause, the steam flow and the fuel flow being introduced to the combustor simultaneously.

The method of any preceding clause, the fuel flow being only introduced when a loss in pressure in the steam flow exists.

The method of any preceding clause, the fuel flow being introduced into a secondary zone of the combustor.

The method of any preceding clause, the steam flow being introduced into a secondary zone of the combustor.

The method of any preceding clause, further comprising generating the steam flow from a heat recovery system.

The method of any preceding clause, further comprising providing the steam flow from a steam source.

The method of any preceding clause, the fuel flow and the steam flow being angled with respect to a vertical axis perpendicular to a centerline axis of the combustor.

The method of any preceding clause, the angle being tangential to the combustor.

The method of any preceding clause, the fuel flow being a secondary fuel flow and the method further includes injecting a primary fuel flow into a forward end of the combustor to generate combustion gases.

The method of the preceding clause, the secondary fuel flow being downstream of the primary fuel flow.

The method of any preceding clause, the primary fuel flow being not based on the pressure of the steam flow.

The method of any preceding clause, the primary fuel flow being introduced into the combustor in a primary zone of the combustor.

The method of any preceding clause, including monitoring the pressure of the steam flow to generate a monitored pressure, detecting the loss in pressure of the steam flow when the monitored pressure is below a predetermined pressure value, and injecting the secondary fuel flow into the combustor based on the detecting of the loss in pressure of the steam flow.

The method of any preceding clause, including monitoring a power output of the turbine engine to generate a monitored power output, detecting the loss in power output of the turbine engine when the monitored power output is below a predetermined power value, and injecting the secondary fuel flow into the combustor based on the detecting of the loss in power output in the turbine engine or both.

The method of any preceding clause, including injecting a secondary steam flow and the secondary fuel flow into the combustor through separate fuel injectors.

The method of any preceding clause, including injecting a secondary steam flow and the secondary fuel flow into the combustor through a single fuel injector.

The method of the preceding clause, the single fuel injector having separate flow paths for the secondary steam flow and the secondary fuel flow that are not fluidly connected.

The method of any preceding clause, including injecting a secondary steam flow and the secondary fuel flow into the combustor through a single fuel injector, the secondary steam flow and the secondary fuel flow being mixed together within the single fuel together in the same flow path before being injected into the combustor.

Although the foregoing description is directed to the preferred embodiments of the present disclosure, other variations and modifications will be apparent to those skilled in the art and may be made without departing from the spirit or the scope of the disclosure. Moreover, features described in connection with one embodiment of the present disclosure may be used in conjunction with other embodiments, even if not explicitly stated above.

## Claims

1. A turbine engine (10) comprising:
a combustor (28, 500, 600, 700, 800, 900, 1000) positioned in a core air flow that combusts a compressed air flow and a primary fuel flow to generate combustion gases (74); and
a fuel and steam system (100, 200, 300, 400) fluidly coupled to the combustor (28, 500, 600, 700, 800, 900, 1000), the fuel and steam system (100, 200, 300, 400) comprising:
a steam system (104, 204, 304, 404) for providing a steam flow along a steam supply line (112, 212, 312, 412) to the combustor (28, 500, 600, 700, 800, 900, 1000); and
a fuel system (102, 202, 302, 402) for providing the primary fuel flow and a secondary fuel flow to the combustor (28, 500, 600, 700, 800, 900, 1000), the fuel system (102, 202, 302, 402) having a first state in which there is a first flow rate of the secondary fuel flow to the combustor (28, 500, 600, 700, 800, 900, 1000) and a second state in which there is a second flow rate of the secondary fuel flow to the combustor (28, 500, 600, 700, 800, 900, 1000), the first flow rate and the second flow rate being different, and the first state and the second state based on a condition of the steam system (104, 204, 304, 404).

2. The turbine engine (10) of claim 1, wherein (i) the steam flow and the secondary fuel flow are provided at the same axial location along a length of the combustor (28, 500, 600, 700, 800, 900, 1000) or (ii) the secondary fuel flow is provided upstream of the steam flow, and, optionally, the secondary fuel flow is provided downstream of the primary fuel flow.

3. The turbine engine (10) of any preceding claim, wherein (i) the first flow rate of the secondary fuel flow is zero such that no secondary fuel flow is provided to the combustor (28, 500, 600, 700, 800, 900, 1000) in the first state or (ii) the second flow rate is greater than the first flow rate or (iii) both.

4. The turbine engine (10) of any preceding claim, wherein the steam system (104, 204, 304, 404) has an initial operating pressure, and the fuel system (102, 202, 302, 402) exhibits the second state based on a pressure of the steam system (104, 204, 304, 404) being at least five percent lower than the initial operating pressure.

5. The turbine engine (10) of any preceding claim, further comprising a sensor system (332) configured to detect a pressure of the steam system (104, 204, 304, 404), wherein the fuel system (102, 202, 302, 402) exhibits the first state based on the pressure of the steam system (104, 204, 304, 404) being above a predetermined value and the fuel system (102, 202, 302, 402) exhibits the second state based on the pressure of the steam system (104, 204, 304, 404) being at least five percent less than the predetermined value.

6. The turbine engine (10) of any preceding claim, the fuel and steam system (100, 200, 300, 400) further comprising:
a secondary fuel supply line (110, 210) for providing the secondary fuel flow to the combustor (28, 500, 600, 700, 800, 900, 1000); and
a fuel flow control device (320) located along the secondary fuel supply line (110, 210), the fuel flow control device (320) configured to control the first state and the second state.

7. The turbine engine (10) of claim 6, wherein the fuel flow control device (320) is closed in the first state and open in the second state, and, the turbine engine (10) optionally comprising a controller (334) configured to actuate the fuel flow control device (320) to place the fuel system (102, 202, 302, 402) in the first state or the second state.

8. The turbine engine (10) of claim 7, wherein the controller (334) is configured to actuate the fuel flow control device (320) based on a pressure of the steam system (104, 204, 304, 404) or a power output of the turbine engine (10).

9. The turbine engine (10) of any preceding claim, the fuel system (102, 202, 302, 402) comprising:
a primary fuel supply line (106, 206) having a primary fuel injector (108, 208) at a forward end of the combustor (28, 500, 600, 700, 800, 900, 1000); and
a secondary fuel supply line (110, 210) having a secondary fuel injector (216) along an axial length of the combustor (28, 500, 600, 700, 800, 900, 1000).

10. The turbine engine (10) of claim 9, the steam system (104, 204, 304, 404) further comprising a steam injector (218, 418, 638, 738, 840) for providing the steam flow from the steam supply line (112, 212, 312, 412) at a location along the axial length of the combustor (28, 500, 600, 700, 800, 900, 1000), wherein the steam injector (218, 418, 638, 738, 840) and the secondary fuel injector (216) are a combined fuel-steam injector (116, 316, 536, 836).

11. The turbine engine (10) of claim 10, the steam system (104, 204, 304, 404) further comprising the steam supply line (112, 212, 312, 412) having a steam injector (218, 418, 638, 738, 840) for providing the steam flow along the axial length of the combustor (28, 500, 600, 700, 800, 900, 1000), wherein the steam injector (218, 418, 638, 738, 840) and the secondary fuel injector (216) are separate.

12. The turbine engine (10) of claim 11, wherein the separate fuel injector (308, 416, 636, 736) and the steam injector (218, 418, 638, 738, 840) are provided in the same body.

13. A method of operating the turbine engine (10) of any preceding claim, the method comprising:
introducing the steam flow into the combustor (28, 500, 600, 700, 800, 900, 1000); and
introducing the secondary fuel flow into the combustor (28, 500, 600, 700, 800, 900, 1000) based on a loss in pressure of the steam flow or a loss in power output of the turbine engine (10).

14. The method of claim 13, further comprising:
monitoring the pressure of the steam flow to generate a monitored pressure;
monitoring a power output of the turbine engine (10) to generate a monitored power output;
detecting the loss in pressure of the steam flow when the monitored pressure is below a predetermined pressure value;
detecting the loss in power output of the turbine engine (10) when the monitored power output is below a predetermined power value; and
injecting the secondary fuel flow into the combustor (28, 500, 600, 700, 800, 900, 1000) based on the detecting of the loss in pressure of the steam flow or based on the detecting of the loss in power output in the turbine engine (10) or both.

15. The method of claim 14, (i) wherein injecting the secondary fuel flow into the combustor (28, 500, 600, 700, 800, 900, 1000) only occurs when the detected loss in pressure of the steam flow exists or (ii) the method further comprising not injecting the secondary fuel flow into the combustor (28, 500, 600, 700, 800, 900, 1000) based on a monitored pressure being at or above the predetermined value or (iii) both.
